# EUROPÄISCHE PATENTSCHRIFT

(11) **EP 1 953 024 B1**
(45) Veröffentlichungstag und Bekanntmachung des Hinweises auf die Patenterteilung: **30.03.2016**
(21) Anmeldenummer: 08100066.3
(22) Anmeldetag: 03.01.2008
(51) Int. Cl.: B60K 15/077

(54) **Vorrichtung zum Fördern von Kraftstoff**
Device for transporting fuel
Dispositif destiné au transport de carburant

(30) Priorität: 30.01.2007 DE 102007004565
(43) Veröffentlichungstag der Anmeldung: 06.08.2008
(73) Patentinhaber: ROBERT BOSCH GMBH, 70442 Stuttgart (DE)
(72) Erfinder: Wettemann-Del Chin, Wolfgang, 71739, Oberriexingen (DE); Schneider, Werner, Farmington Hills, MI 48331 (US); Wieland, Thomas, 70193, Stuttgart (DE); Siegel, Petr, 37005, Ceske Budejovice (CZ); Beyer, Martin, 71672, Marbach (DE); Breidert, Joachim, 71701, Schwieberdingen (DE); Braun, Hans-Peter, 72172, Renfrizhausen (DE); Seitz, Ansgar, 73765, Neuhausen (DE)

(56) Entgegenhaltungen:
- DE-A1- 19 823 573
- DE-A1- 19 900 378
- DE-C1- 19 819 117
- US-A- 5 236 000
- US-A1- 2005 061 300
- US-B2- 7 066 153

## Beschreibung

### Stand der Technik

Die Erfindung geht aus von einer Vorrichtung zum Fördern von Kraftstoff nach der Gattung des Hauptanspruchs.

Es ist schon eine Vorrichtung zum Fördern von Kraftstoff aus einem Kraftstofftank zu einer Brennkraftmaschine bekannt, mit einem Speicherbehälter und einer in einem Anschluss des Speicherbehälteres um eine Drehachse drehbar gelagerten Saugleitung. Eine Saugstrahlpumpe saugt über die Saugleitung Kraftstoff aus einem vom Speicherbehälter entfernten Bereich des Kraftstofftanks an. Das dem Speicherbehälter abgewandte Ende der Saugleitung muß immer an einem Boden des Kraftstofftanks anliegen, damit auch bei sehr geringen Füllständen im Kraftstofftank noch Kraftstoff angesaugt werden kann. Daher weist die Vorrichtung einen Drahtbügel zum Niederhalten der Saugleitung auf, der die Saugleitung in einer vorbestimmten Position hält. Der Drahtbügel ist am Speicherbehälter befestigt und verläuft im wesentlichen parallel zur Saugleitung. Die Saugleitung ist elastisch biegsam ausgebildet und mittels von Befestigungsmitteln am Drahtbügel fixiert. Die Montage der Saugleitung am Drahtbügel ist vergleichsweise aufwendig. Die Kosten für den Drahtbügel sind vergleichsweise hoch.

Weiterhin ist aus der DE 198 19 117 C1 eine Vorrichtung zum Fördern von Kraftstoff bekannt, die einen drehbar gelagerten Tragarm aufweist, an dem eine zu einer Saugstrahlpumpe führende Förderleitung vorgesehen ist und der durch ein Fixiermittel gegen eine Innenwand des Kraftstoffbehälters vorgespannt ist.

Den Stand der Technik nach dem Oberbegriff des Anspruchs 1 stellt hier die DE 198 19 117 dar.

### Vorteile der Erfindung

Das erfindungsgemäße Förderagregat mit den kennzeichnenden Merkmalen des Hauptanspruchs hat demgegenüber den Vorteil, dass die Funktion des Drahtbügels in die Saugleitung integriert ist, indem die Saugleitung eine aufgeprägte gebogene Form aufweist und am Speicherbehälter ein die Drehbarkeit der Saugleitung begrenzender Anschlag vorgesehen ist, der derart angeordnet ist, dass die Saugleitung bei dem auf einen Boden aufgesetzten Speicherbehälter gegen den Boden vorgespannt ist. Auf diese Weise werden die Herstellungs- und Montagekosten der Vorrichtung deutlich verringert. Der Drahtbügel entfällt als zusätzliches Teil.

Durch die in den Unteransprüchen aufgeführten Maßnahmen sind vorteilhafte Weiterbildungen und Verbesserungen der im Hauptanspruch angegebenen Vorrichtung möglich.

Besonders vorteilhaft ist, wenn der Anschlag rippenförmig ausgebildet ist und mit seiner Längserstreckung in Richtung einer Achse des Speicherbehälteres verläuft, da der Anschlag auf diese Weise besonders stabil ausgebildet ist und mit wenig Kunststoff herstellbar ist.

Desweiteren vorteilhaft ist, wenn der Anschlag über einen Verbindungssteg mit dem Anschluss verbunden ist, da der Anschlag auf diese Weise noch stabiler ausgeführt ist.

Gemäß einer vorteilhaften Ausgestaltung ist der Verbindungssteg und/oder der Anschluss mittels Rippen verstärkt.

Weiterhin vorteilhaft ist, an dem dem Anschluss zugewandten Ende der Saugleitung ein Stecker vorgesehen ist, der mit dem Anschluss verbindbar ist und einen radial bezüglich der Drehachse abstehenden Kragabschnitt aufweist. Durch den Stecker ist die Saugleitung leicht montierbar und austauschbar. Der Kragabschnitt des Steckers wirkt vorteilhafterweise mit dem Anschlag zusammen, so dass die Begrenzung der Drehbarkeit der Saugleitung am Stecker und nicht an der Saugleitung realisiert ist. Dies hat den Vorteil, dass die Saugleitung zuverlässig vorspannbar ist.

Sehr vorteilhaft ist es, wenn der Anschlag derart ausgebildet ist, dass die Saugleitung oder der Stecker nahe dem Anschlag eine Seitenführung erfahren, da die vorgespannte Saugleitung auf diese Weise nicht seitlich ausweichen kann.

Vorteilhaft ist, wenn der Anschluss mit einer Unterdruckquelle, vorzugsweise einer Saugstrahlpumpe, strömungsverbunden ist, da auf diese Weise Kraftstoff aus einem vom Speicherbehälter entfernten Bereich angesaugt wird, ohne eine zusätzliche Förderpumpe außerhalb des Speicherbehälteres zu benötigen.

### Zeichnung

Ein Ausführungsbeispiel der Erfindung ist in der Zeichnung vereinfacht dargestellt und in der nachfolgenden Beschreibung näher erläutert.
- Fig.1: zeigt im Schnitt eine vereinfacht dargestellte Vorrichtung mit einem erfindungsgemäßen Speicherbehälter,
- Fig.2: eine vereinfachte Ansicht der Vorrichtung mit einer Saugleitung,
- Fig.3: eine dreidimensionale Ansicht des Speicherbehälters nach Fig.1 mit dem erfindungsgemäßen Anschlag,
- Fig.4: zeigt eine Ansicht des Steckers der Saugleitung, der mit einem Anschluss des Speicherbehälters verbindbar ist und
- Fig.5: eine Teilansicht des Speicherbehälters nach Fig.1 und Fig.3 mit dem in dem Anschluss befestigten Stecker.

### Beschreibung des Ausführungsbeispiels

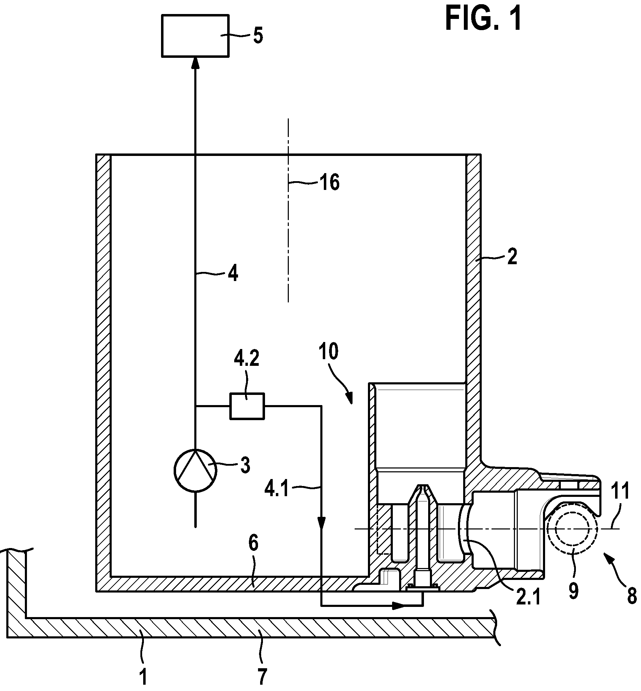

Fig.1 zeigt im Schnitt eine vereinfacht dargestellte Vorrichtung mit einem erfindungsgemäßen Speicherbehälter.

Die Vorrichtung ist in einem mit Kraftstoff gefüllten Vorratsbehälter 1 angeordnet. Sie weist einen Speicherbehälter 2 und ein Förderaggregat 3 auf, das beispielsweise in dem Speicherbehälter 2 angeordnet ist und aus diesem Kraftstoff ansaugt. Das Förderaggregat 3 fördert den Kraftstoff druckerhöht über eine Druckleitung 4 zu einer Brennkraftmaschine 5. Das Förderaggregat 3 kann aber ausdrücklich auch außerhalb des Speicherbehälters 2 oder des Vorratsbehälters 1 angeordnet sein. Der Speicherbehälter 2 ist an einem Tankboden 7 des Vorratsbehälters 1 angeordnet und dient dazu, ausreichend Kraftstoff um das Förderaggregat 3 herum vorzuhalten, damit dieses auch bei niedrigen Füllständen im Vorratsbehälter 1 und beim Beschleunigen, Bremsen, Kurven- und/oder Bergfahren Kraftstoff ansaugen kann. Der beispielsweise topfförmige Speicherbehälter 2 weist einen Boden 6 auf.

An der dem Vorratsbehälter 1 zugewandten Mantelfläche des Speicherbehälters 2 ist ein Anschluss 8 für eine Saugleitung 9 vorgesehen, über die Kraftstoff aus einem Bereich des Vorratsbehälters 1 angesaugt wird, der von dem Speicherbehälter 2 entfernt ist. Beispielsweise verläuft die Saugleitung 9 über einen nicht dargestellten Sattel des Vorratsbehälters 1 hinweg in einen abschnittsweise abgetrennten, nicht dargestellten Bereich des Vorratsbehälters 1. Der über die Saugleitung 9 angesaugte Kraftstoff gelangt über eine am Anschluss 8 vorgesehene Öffnung 2.1 im Speicherbehälter 2 in den Speicherbehälter 2. Die Saugleitung 9 ist über den Anschluss 8 mit einer Unterdruckquelle, beispielsweise einer Förderpumpe 10 verbunden, die einen vorbestimmten Unterdruck zum Ansaugen des Kraftstoffes bereitstellt. Als Förderpumpe 10 ist gemäß dem Ausführungsbeispiel eine Saugstrahlpumpe vorgesehen, die beispielsweise über eine von der Druckleitung 4 abzweigende Treibleitung 4.1 angetrieben wird. In der Treibleitung 4.1 ist beispielsweise ein Steuerventil 4.2 vorgesehen, das erst ab einem vorbestimmten Druck öffnet und Kraftstoff zur Saugstrahlpumpe strömen lässt. Es ist jedoch ausdrücklich auch eine elektrisch betriebene Kraftstoffpumpe möglich.

Die Saugleitung 9 ist am Anschluss 8 um eine Drehachse 11 drehbar gelagert.

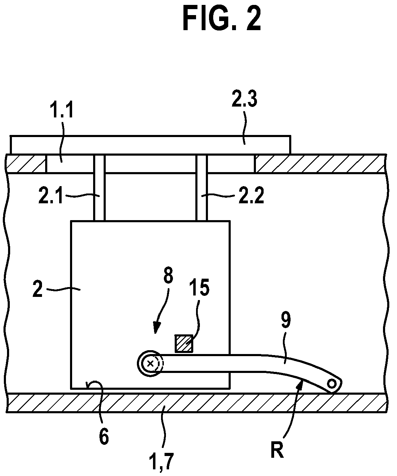

Fig.2 zeigt eine vereinfachte Ansicht der Vorrichtung mit einer gebogenen und gegen den Tankboden vorgespannten Saugleitung.
Bei der Vorrichtung nach Fig.2 sind die gegenüber der Vorrichtung nach Fig.1 gleichbleibenden oder gleichwirkenden Teile durch die gleichen Bezugszeichen gekennzeichnet.

Die Saugleitung 9 muss an ihrem dem Anschluss 8 abgewandten Ende an den Tankboden 7 angedrückt sein, damit über die Saugleitung 9 auch bei sehr niedrigem Füllstand in dem Vorratsbehälter 1 Kraftstoff angesaugt werden kann.

Erfindungsgemäß ist daher vorgesehen, dass die Saugleitung 9 eine aufgeprägte, zumindest abschnittsweise gebogene oder abgewinkelte Form aufweist und am Speicherbehälter 2 ein die Drehbarkeit der Saugleitung 9 begrenzender Anschlag 15 vorgesehen ist, der derart angeordnet ist, dass die Saugleitung 9 bei auf den Tankboden 7 aufgesetztem Speicherbehälter 2 gegen den Tankboden 7 vorgespannt ist. Unter der aufgeprägten Form ist zu verstehen, dass die Saugleitung 9 bei der Herstellung eine vorbestimmte Form mit mindestens einem Biegeradius R erhält und derart steif ausgebildet ist, dass sie diese auch bei Einwirkung einer vorbestimmten Kraft im wesentlichen beibehält. Die Saugleitung 9 ist beispielsweise schlauchförmig ausgebildet.

Beim Einsetzen des Speicherbehälters 2 in den Vorratsbehälter 1 eilt die Saugleitung 9 gegenüber dem Boden 6 des Speicherbehälters 2 voraus, so dass die Saugleitung 9 vor dem Boden 6 des Speicherbehälters 2 den Tankboden 7 erreicht und sich anschließend um die Drehache 11 unter einer Verkleinerung des spitzen Winkels zwischen der Saugleitung 9 und dem Boden 6 dreht, bis die Saugleitung 9 durch den Anschlag 15 nicht weiter drehbar ist. Wenn die Saugleitung 9 mit ihrem einen Ende ohne Vorspannung am Tankboden 7 anliegt und an ihrem anderen Ende der Anschlag 15 erreicht ist, verbleibt ein vorbestimmter Abstand zwischen dem Boden 6 des Speicherbehälters 2 und dem Tankboden 7, der dazu dient, durch die weitere Bewegung des Speicherbehälters 2 bis an den Tankboden 7 die Saugleitung 9 zwischen dem Anschlag 15 und dem Tankboden 7 vorzuspannen, so dass das dem Tankboden 7 zugewandte Ende der Saugleitung 9 gegen den Tankboden 7 gedrückt ist. Der Anschlag 15 stützt das auf die Saugleitung 9 wirkende Biegemoment ab und bildet auf diese Weise ein Widerlager.

Der Speicherbehälter 2 ist über Verbindungsmittel 2.2 mit einem Tankflansch 2.3 verbunden, der eine Montageöffnung 1.1 des Vorratsbehälters 1 dicht verschließt.

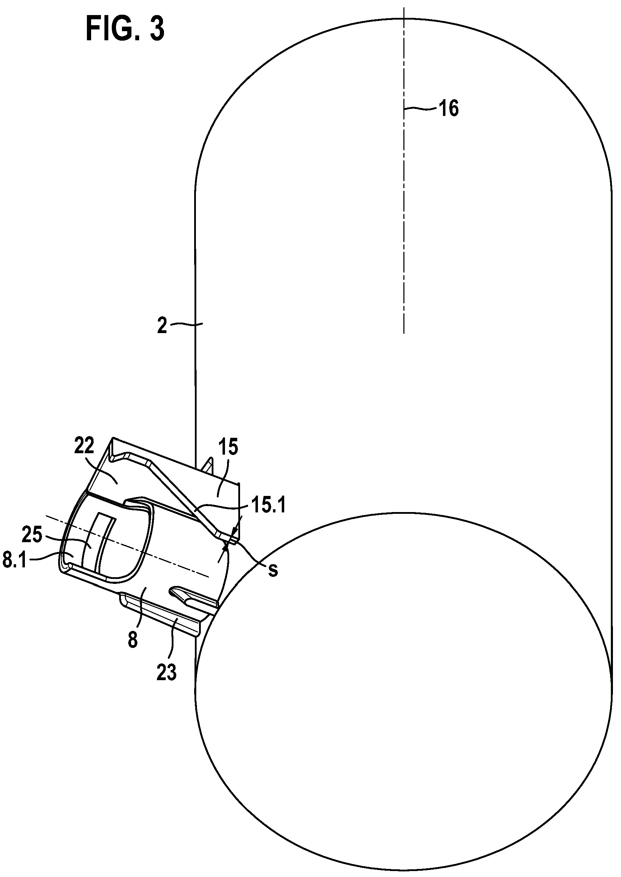

Fig.3 zeigt eine dreidimensionale Ansicht des Speicherbehälters nach Fig.1 mit dem erfindungsgemäßen Anschlag.
Bei der Vorrichtung nach Fig.3 sind die gegenüber der Vorrichtung nach Fig.1 und Fig.2 gleichbleibenden oder gleichwirkenden Teile durch die gleichen Bezugszeichen gekennzeichnet.

Der Anschlag 15 ist gemäß dem Ausführungsbeispiel rippenförmig ausgeführt und verläuft mit seiner Längserstreckung in Richtung einer Achse 16 des Speicherbehälters 2. Durch diese Anordnung ist der Anschlag 15 besonders steif ausgeführt. Der Anschlag 15 ist beispielsweise über einen Verbindungssteg 22 mit dem Anschluss 8 fest verbunden, um die Stabilität und Festigkeit des Anschlags 15 zu erhöhen. Der Verbindungssteg 22 verläuft beispielsweise horizontal. Weiterhin kann der Verbindungssteg 22 und der Anschluss 8 mittels von Rippen 23 verstärkt sein. Der Anschlag 15 kann aber auch stegförmig, zylinderförmig, stiftförmig, dornförmig, quaderförmig oder ähnlich ausgeführt sein.

Der Anschluss 8 ist beispielsweise als Aufnahme oder Stutzen ausgeführt. Der Anschluss 8 ist beispielsweise an seinem dem Speicherbehälter 2 abgewandten Ende umfangsseitig zum Anschlag 15 hin geöffnet. Dadurch ist eine teilringförmige Wandung 8.1 am Ende des Anschlusses 8 gebildet, die einen unteren Anschlag für die Saugleitung 9 bildet, so dass die Saugleitung 9 zwischen dem Anschlag 15 und dem unteren Anschlag drehend bewegbar ist.

Der Anschlag 15 weist eine vorbestimmte Wandstärke s auf. Die mit der Saugleitung 9 zusammenwirkende Seite 15.1 des Anschlags 15 mit der Wandstärke s ist von der Kontur her beispielsweise der Form der Saugleitung 9 angepasst, so dass die Saugleitung 9 nahe dem Anschlag 15 eine seitliche Führung erhält.

An dem dem Anschluss 8 zugewandten Ende der Saugleitung 9 ist beispielsweise ein Stecker 12 vorgesehen, der mit dem Anschluss 8 verbindbar und am Anschluss 8 drehbar angeordnet ist. Beispielsweise ist der Stecker 12 mittels einer lösbaren Steck- oder Schnappverbindung am Anschluss 8 befestigt, indem ein Schnapphaken 24 des Steckers 12 in eine Ausnehmung 25 der teilringförmigen Wandung 8.1 einrastet. Die Saugleitung 9 kann aber auch unmittelbar am Anschluss 8 angeschlossen und drehbar sein.

Der Anschlag 15 kann derart angeordnet sein, dass er bei am Tankboden 7 aufgesetztem Speicherbehälter 2 unmittelbar auf die Saugleitung 9 oder gemäß dem Ausführungsbeispiel mittelbar auf den Kragabschnitt 18 des Steckers 12 vorspannend wirkt.

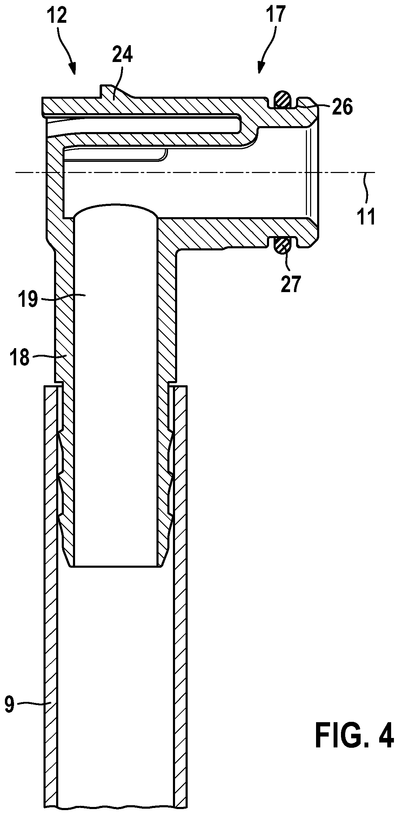

Fig.4 zeigt eine Ansicht des Steckers der Saugleitung. Bei dem Stecker nach Fig.4 sind die gegenüber der Vorrichtung nach Fig.1 bis Fig.3 gleichbleibenden oder gleichwirkenden Teile durch die gleichen Bezugszeichen gekennzeichnet.

Der Stecker 12 weist einen im Anschluss 8 vorgesehenen Steckerabschnitt 17 und einen vom Steckerabschnitt 17 radial bezüglich der Drehachse 11 abstehenden Kragabschnitt 18 auf. Der Steckerabschnitt 17 und der Kragabschnitt 18 bilden gemäß dem Ausführungsbeispiel einen 90-Grad Rohrbogen, in dem ein Verbindungskanal 19 ausgebildet ist. Die Saugleitung 9 ist mit dem Verbindungskanal 19 strömungsverbunden, beispielsweise indem sie auf einen Stutzen des Kragabschnitts 18 aufgeschoben ist. Der Verbindungskanal 19 mündet über die Öffnung 2.1 in den Speicherbehälter 2. Die Saugleitung 9 könnte aber auch an der Stirnseite des Steckerabschnitts 17 angeschlossen sein und der Kragabschnitt 18 zusammen mit dem Anschlag 15 nur die Funktion des Spannungsaufbaus haben.
In einer Nut 26 des Steckerabschnitts 17 ist ein Dichtelement 27, beispielsweise ein O-Ring, vorgesehen, der die Verbindung zwischen dem Anschluss 8 und dem Stecker 12 abdichtet.

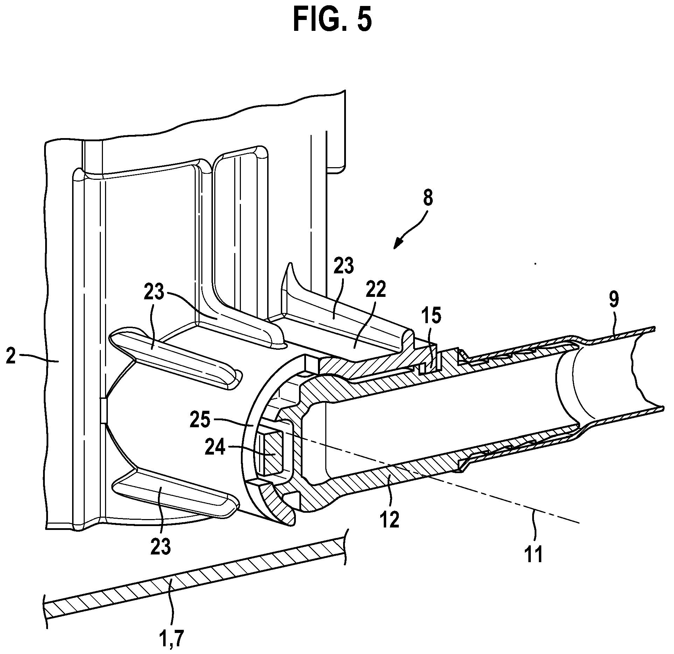

Fig.5 zeigt eine Teilansicht des Speicherbehälters nach Fig.1 bis Fig.3 mit dem im Anschluss des Speicherbehälters angeordneten Stecker.
Bei der Vorrichtung nach Fig.5 sind die gegenüber der Vorrichtung nach Fig.1 bis Fig.4 gleichbleibenden oder gleichwirkenden Teile durch die gleichen Bezugszeichen gekennzeichnet.

## Patentansprüche

1. Vorrichtung zum Fördern von Kraftstoff mit einem Speicherbehälter (2), einem Kraftstoff aus dem Speicherbehälter (2) ansaugenden Förderaggregat (3), einer um eine Drehachse (11) drehbar gelagerten Leitung (9), die eine aufgeprägte gebogene oder abgewinkelte Form aufweist, und mit einem die Drehbarkeit der Leitung (9) begrenzenden Anschlag (15), und wobei die Leitung (9) eine Saugleitung ist, die über einen am Speicherbehälter (2) vorgesehenen Anschluss (8) mit einer Unterdruckquelle (10) verbunden ist, **dadurch gekennzeichnet**, das an dem dem Anschluss (8) zugewandten Ende der Saugleitung (9) ein Stecker (12) vorgesehen ist, der mit dem Anschluss (8) verbindbar ist und einen in den Speicherbehälter (2) mündenden Verbindungskanal (19) aufweist, der mit der Saugleitung (9) strömungsverbunden ist, und dass der Anschlag (15) am Speicherbehälter (2) derart angeordnet ist, dass die Saugleitung (9) bei auf einen Boden (7) aufgesetztem Speicherbehälter (2) gegen den Boden (7) vorgespannt ist.

2. Vorrichtung nach Anspruch 1, **dadurch gekennzeichnet, dass** der Anschlag (15) rippenförmig, zylinderförmig oder quaderförmig ausgebildet ist.

3. Vorrichtung nach Anspruch 1, **dadurch gekennzeichnet, dass** der Anschlag (15) über einen Verbindungssteg (22) mit dem Anschluss (8) verbunden ist.

4. Vorrichtung nach Anspruch 3, **dadurch gekennzeichnet, dass** der Verbindungssteg (22) und der Anschluss (8) mittels Rippen (23) verstärkt sind.

5. Vorrichtung nach Anspruch 1, **dadurch gekennzeichnet, dass** der Stecker (12) einen radial bezüglich der Drehachse (11) abstehenden Kragabschnitt (18) aufweist.

6. Vorrichtung nach Anspruch 1 oder 5, **dadurch gekennzeichnet, dass** der Anschlag (15) unmittelbar auf die Saugleitung (9) oder mittelbar auf den Kragabschnitt (18) des Steckers (12) vorspannend wirkt.

7. Vorrichtung nach Anspruch 1 oder 5, **dadurch gekennzeichnet, dass** der Anschlag (15) derart ausgebildet ist, dass die Saugleitung (9) oder der Stecker (12) nahe dem Anschlag (15) eine Seitenführung erfahren.

8. Vorrichtung nach Anspruch 1, **dadurch gekennzeichnet, dass** der Anschluss (8) mit einer Saugstrahlpumpe strömungsverbunden ist.

## Claims

1. Device for delivering fuel, with a storage tank (2), a delivery unit (3) sucking up fuel from the storage tank (2), a line (9) which is mounted rotatably about an axis of rotation (11) and has an impressed curved or angled shape, and with a stop (15) limiting the rotatability of the line (9), and wherein the line (9) is a suction line which is connected to a negative pressure source (10) via a connection (8) provided on the storage tank (2), **characterized in that** a plug (12) is provided at that end of the suction line (9) which faces the connection (8), said plug being connectable to the connection (8) and having a connecting duct (19) which opens into the storage tank (2) and is connected in terms of flow to the suction line (9), and **in that** the stop (15) is arranged on the storage tank (2) in such a manner that, when the storage tank (2) is placed onto a base (7), the suction line (9) is prestressed against the base (7).

2. Device according to Claim 1, **characterized in that** the stop (15) is of ribbed, cylindrical or cuboidal design.

3. Device according to Claim 1, **characterized in that** the stop (15) is connected to the connection (8) via a connecting web (22).

4. Device according to Claim 3, **characterized in that** the connecting web (22) and the connection (8) are reinforced by means of ribs (23).

5. Device according to Claim 1, **characterized in that** the plug (12) has a collar section (18) protruding radially with respect to the axis of rotation (11).

6. Device according to Claim 1 or 5, **characterized in that** the stop (15) acts in a prestressing manner directly on the suction line (9) or indirectly on the collar section (18) of the plug (12).

7. Device according to Claim 1 or 5, **characterized in that** the stop (15) is designed in such a manner that the suction line (9) or the plug (12) is guided laterally in the vicinity of the stop (15).

8. Device according to Claim 1, **characterized in that** the connection (8) is connected in terms of flow to a sucking jet pump.

## Revendications

1. Dispositif destiné au transport de carburant, comprenant un réservoir de stockage (2), une unité de transport (3) aspirant du carburant depuis le réservoir de stockage (2), une conduite (9) supportée de manière rotative autour d'un axe de rotation (11), laquelle présente une forme marquée courbe ou coudée, et comprenant une butée (15) limitant la capacité de rotation de la conduite (9), et dans lequel la conduite (9) est une conduite d'aspiration qui est connectée par le biais d'un raccord (8) prévu au niveau du réservoir de stockage (2) à une source de dépression (10), **caractérisé en ce qu'**un connecteur (12) est prévu au niveau de l'extrémité de la conduite d'aspiration (9) tournée vers le raccord (8), lequel connecteur peut être connecté au raccord (8) et présente un canal de liaison (19) débouchant dans le réservoir de stockage (2), lequel canal de liaison est connecté fluidiquement à la conduite d'aspiration (9) et **en ce que** la butée (15) est disposée au niveau du réservoir de stockage (2) de telle sorte que, lorsque le réservoir de stockage (2) est posé sur un fond (7), la conduite d'aspiration (9) soit précontrainte contre le fond (7).

2. Dispositif selon la revendication 1, **caractérisé en ce que** la butée (15) est réalisée sous forme nervurée, sous forme cylindrique ou sous forme parallélépipédique.

3. Dispositif selon la revendication 1, **caractérisé en ce que** la butée (15) est connectée au raccord (8) par le biais d'une bande de liaison (22).

4. Dispositif selon la revendication 3, **caractérisé en ce que** la bande de liaison (22) et le raccord (8) sont renforcés au moyen d'ailettes (23).

5. Dispositif selon la revendication 1, **caractérisé en ce que** le connecteur (12) présente une portion de col (18) faisant saillie radialement par rapport à l'axe de rotation (11).

6. Dispositif selon la revendication 1 ou 5, **caractérisé en ce que** la butée (15) est précontrainte directement sur la conduite d'aspiration (9) ou indirectement sur la portion de col (18) du connecteur (12).

7. Dispositif selon la revendication 1 ou 5, **caractérisé en ce que** la butée (15) est réalisée de telle sorte que la conduite d'aspiration (9) ou le connecteur (12) subit un guidage latéral à proximité de la butée (15).

8. Dispositif selon la revendication 1, **caractérisé en ce que** le raccord (8) est connecté fluidiquement à une pompe à jet aspirant.
